# EUROPÄISCHE PATENTSCHRIFT

(11) **EP 1 956 703 B1**
(45) Veröffentlichungstag und Bekanntmachung des Hinweises auf die Patenterteilung: **07.04.2010**
(21) Anmeldenummer: 07002682.8
(22) Anmeldetag: 08.02.2007
(51) Int. Cl.: H02M 7/537, H02M 3/335

(54) **Einrichtung zum Einspeisen elektrischer Energie aus einer Energiequelle**
Device for feeding electrical energy from an energy source
Dispositif destiné à l'alimentation électrique à partir d'une source de courant

(43) Veröffentlichungstag der Anmeldung: 13.08.2008
(73) Patentinhaber: SMA Solar Technology AG, 34266 Niestetal (DE)
(72) Erfinder: Falk, Andreas, 34131 Kassel (DE)
(74) Vertreter: Walther, Walther & Hinz GbR

(56) Entgegenhaltungen:
- DE-A1-102005 023 291
- US-A- 5 717 582
- US-A- 6 031 747
- US-A1- 2004 125 618

## Beschreibung

Die Erfindung betrifft eine Einrichtung zum Einspeisen elektrischer Energie aus einer Energiequelle mit variabler Quellspannung in ein elektrisches Energieversorgungsnetz, wobei die Einrichtung einen Transformator zur galvanischen Trennung, einen Resonanzwechselrichter mit Halbleiterschaltern, einen oder mehrere Resonanzkondensatoren und einen Gleichrichter umfasst.

Viele Quellen für elektrische Energie, insbesondere Solargeneratoren, Windenergieanlagen mit sogenannten PM-Generatoren, drehzahlvariable Verbrennungsmotoren, Brennstoffzellen, Batterien und dergleichen weisen häufig eine stark variierende Spannung und eine relativ hohe Innenimpedanz auf. In der Regel liegt bei solchen Energiequellen eine Gleichspannung vor, aber auch Energiequellen mit einer einphasigen oder dreiphasigen Wechselspannung mit variabler Frequenz können in ihrer Quellenspannung stark variieren.

Um elektrische Energie aus solchen Quellen in ein Energieversorgungsnetz einzuspeisen, bedarf es einer Anpasseinrichtung. Für durch einen Solargenerator zur Verfügung gestellte elektrische Energie sind Solarwechselrichter bekannt, die speziell an die Charakteristik von Solar- bzw. Photovoltaikzellen angepasst sind. Das Energieversorgungsnetz kann ein öffentliches Energieversorgungsnetz oder ein Inselnetz für einen oder mehrere Verbraucher bzw. relativ wenige Verbraucher sein.

Eine Anpasseinrichtung der genannten Art hat mehrere Aufgaben.

Zum einen soll sie eine Anpassung von erzeugter Spannung und gelieferter Frequenz an die Verhältnisse im Energieversorgungsnetz, in das eingespeist werden soll, durchführen. Zum anderen soll eine Herstellung eines möglichst optimalen Betriebspunktes für die Energiequelle erzielt werden. Bei Solargeneratoren soll eine optimale sogenannte MPP-Regelung eingesetzt werden (Maximum Power Point bzw. Betriebspunkt mit maximaler Leistung), so dass ein maximaler Energieertrag erzielt wird. Außerdem müssen alle Sicherheitsanforderungen bei der Einspeisung entsprechend den aktuellen Normen bzw. den gültigen Regeln der Technik beachtet und erfüllt werden.

Wird ein hoher Wirkungsgrad erzielt, so wird damit die Wirtschaftlichke der Anpasseinrichtung verbessert und der Wärmeverlust der Anlage reduziert, was zu weniger thermischen Problemen führt. In vielen Fällen ist aufgrund technischer Erfordernisse oder aufgrund von länderspezifischen Regeln und Normen eine galvanische Trennung zwischen der Energiequelle und dem Versorgungsnetz erforderlich. Eine Anpasseinrichtung mit galvanischer Trennung weist in der Regel einen schlechteren Wirkungsgrad auf als eine Anpasseinrichtung ohne galvanische Trennung.

Bekannt sind Anpasseinrichtungen mit galvanischer Trennung, die als einphasige oder dreiphasige Wechselrichter mit einem Niederfrequenztransformator oder mit einem Hochfrequenztransformator ausgeführt sind.

Bei der ersten Variante wird einer Energiequelle mit hohem Innenwiderstand ein einphasiger oder ein dreiphasiger Wechselrichter nachgeschaltet. Wenn es sich bei der Energiequelle um eine Gleichspannungsquelle, insbesondere um einem Solargenerator, oder um eine Brennstoffzelle, handelt, kann der Wechselrichter direkt angeschlossen werden. Bei Wechselspannungsquellen, insbesondere bei Wind- oder Wasserkraftanlage mit einem PM Generator, muss noch ein Gleichrichter zwischengeschaltet werden. Der Wechselrichter ist üblicherweise als H-Brücke bei einphasigen Anlagen oder als Dreiphasenbrücke bei dreiphasigen Anlagen ausgeführt.

Dem Wechselrichter wird in der Regel ein Sinusfilter und ein Transformator nachgeschaltet. An die Transformatorsekundärseite ist das Energieversorgungsnetz angeschlossen. Eine solche Einrichtung ist seit Langem bekannt.

Bei der Variante mit einem Niederfrequenztransformator muss das Transformatorübersetzungsverhältnis so gewählt werden, dass trotz einer geringen bzw. minimalen Spannung an der Energiequelle und maximaler Netzspannung elektrische Energie noch eingespeist werden kann. Die minimale Spannung tritt insbesondere bei einem Solargenerator bei maximaler Einstrahlung und damit bei hohem Strom und bei hoher Umgebungstemperatur auf. Der Strom kann daher auf der Primärseite des Transformators jedoch sehr groß werden. Die Halbleiterschalter des Niederfrequenz-Wechselrichters müssen einerseits für diesen hohen Strom und andererseits auch gleichzeitig für die maximale Spannung der Energiequelle ausgelegt werden. Bedingt durch die Schaltverluste in der Halbieiterschaltem des Niederfrequenz-Wechselrichters steigen die Verluste mit zunehmender Spannung an der Energiequelle an.

Die Variante mit dem Niederfrequenztransformator weist außerdem noch weitere Nachtelle auf.

Der Niederfrequenztransformator hat relativ große Abmessungen und ist sehr schwer. Diese Variante arbeitet mit hohen Strömen auf der Transformatorprimärseite, weil das Übersetzungsverhältnis auf den Fall der minimalen Spannung an der Energiequelle und maximaler Spannung im Energieversorgungsnetz angepasst sein muss. Darüber hinaus nehmen die Halbleiterverluste mit zunehmender Spannung an der Energiequelle zu. Ein weiterer Nachteil ist, dass je höher die maximal zulässige Sperrspannung der Halbleiter ist, die Durchlass- und Schaltverluste umso höher sind, was einen geringen Wirkungsgrad der Anpasseinrichtung zur Folge hat.

Bei der zweiten Variante mit einem Hochfrequenztransformator wird einer Energiequelle mit relativ hohem Innenwiderstand ein Hochfrequenz-Wechselrichter (NF-Wechselrichter) nachgeschaltet. Wenn es sich bei der Energiequelle um eine Gleichspannungsquelle insbesondere um einen Solargenerator oder eine Brennstoffzelle, handelt, kann der Hochfrequenz-Wechselrichter direkt angeschlossen werden. Bei Wechselspannungsquellen, wie Wind- oder Wasserkraftanlage mit einem PM Generator, muss noch ein Gleichrichter zwischengeschaltet werden.

Der Hochfrequenz-Wechselrichter erzeugt eine hochfrequente Wechselspannung, die über den Hochfrequenztransformator auf die Sekundärseite desselben transformiert wird. Dort wird die Wechselspannung mit einem Diodengleichrichter gleichgerichtet.

Der Gleichrichter speist einen Gleichspannungszwischenkreis. Dem Gleichspannungszwischenkreis ist ein Niederfrequenz-Wechselrichter (NF-Wechselrichter) als H-Brücke bei einphasigen Anlagen oder als Dreiphasenbrücke bei dreiphasigen Anlagen nachgeschaltet. Über einen Sinusfilter wird das Versorgungsnetz mit dem Niederfrequenz-Wechselrichter verbunden.

Weil die Energiequelle in den hier beschriebenen Fällen eine stark schwankende Spannung aufweist, muss oft noch ein Anpasssteller zwischen der Energiequelle und dem Hochfrequenz-Wechselrichter angeschlossen werden, um einen Gleichspannungszwischenkreis auf der Sekundärseite stabil zu halten. Dies ist insbesondere dann der Fall, wenn der Hochfrequenz-Wechselrichter als Resonanzumrichter ausgeführt ist. Resonanzumrlchter haben zwar einen hohen Wirkungsgrad, können aber dagegen nicht zur Spannungsanpassung genutzt werden.

In der EP 1 458 084 A2 wird eine Einrichtung mit einem resonant schaltenden Hochfrequenz-Wechselrichter erläutert. Hierbei wird ein resonanter DC/DC-Wandler mit einem Hochfrequenztransformator genutzt. Eine Eingangsgleichspannung, die insbesondere durch einen Solargenerator zur Verfügung gestellt werden kann, wird durch eine Vollbrücke in eine Wechselspannung umgewandelt und durch den Hochfrequenztransformator transformiert. Sekundärseitig befindet sich ebenfalls eine Vollbrücke, die derart ausgeführt ist, dass der Wandler bidirektional betrieben werden kann. Eine zusätzliche Induktivität und ein zusätzlicher Kondensator, die in Reihe zur Sekundärwicklung des Hochfrequenztransformators geschaltet sind, bilden einen Resonanzkreis.

Da die Ausgangsspannung des Solargenerators starken Schwankungen unterliegt, jedoch eine stabile Spannung im Gleichspannungszwischenkreis nach dem Gleichrichter zur Verfügung stehen soll, muss in der Praxis eine zusätzliche Anpassstufe vorgesehen werden. Diese Anpassstufe kann vor dem DC/DC-Wandler oder danach angeordnet sein. Sie kann als Hochsetzsteller oder als Tiefsetzsteller ausgeführt werden.

Aus der deutschen Offenlegungsschrift DE 10 2005 023 291 A1 ist eine weitere Einrichtung bekannt: Diese Einrichtung umfasst eine solche Anpasseinrichtung. Die Anpasseinrichtung besteht aus einem Resonanzwandler mit galvanischer Trennung und einem vorgeschalteten Hochsetzsteller. Eine solche Anpassstufe verursacht aber zusätzliche Kosten und benötigt zusätzlichen Platz. Des Weiteren werden in einer solchen Stufe zusätzliche Verluste verursacht. Es ist also nicht nur eine zusätzliche Anpassstufe erforderlich, was mehr Bauteile, mehr Kosten und mehr Platz mit sich bringt, sondern ein gravierender Nachteil ist, dass der Wirkungsgrad durch eine solche zusätzliche Stufe reduziert wird.

Bekannt sind nicht nur Einrichtungen mit resonant schaltendem Hochfrequenz-Wechselrichter sondern auch mit hart schaltendem Hochfrequenz-Wechselrichter.

Wird ein Hochfrequenz-Wechselrichter als hart schaltender Wechselrichte ausgeführt, kann er zwar zu der erforderlichen Spannungsanpassung genutzt werden, weist aber nachteiligerweise einen schlechten Wirkungsgrad auf. In der deutschen Offenlegungsschrift DE 199 37 410 A1 ist eine Variante mit hart schaltendem Hochfrenz-Wechselrichter gezeigt und beschrieben. An eine als Solarmodul ausgeführte Gleichspannungsquelle mit einem Pufferkondensator schließt sich eine Vollbrücke an, die die Gleichspannug in eine Wechselspannung umwandelt. Über einen Hochfrequenz-Transformator wird diese Wechselspannung auf die Sekundärseite transformiert. Die Ausgangsspannung des Transformators wird gleichgerichtet, wobei ein nachgeschalteter Zwischenkreiskondensator aufgeladen wird. Ein sich anschließender dreiphasiger Wechselrichter erzeugt eine annähernd sinusförmige Ausgangsspannung, die in der Amplitude und Frequenz der Netzspannung entspricht.

Das Transformatorübersetzungsverhältnis des Hochfrequenz-Transformators muss dabei so gewählt werden, dass bei der minimalen Spannung an der Energiequelle und maximaler Netzspannung noch elektrische Energie eingespeist werden kann. Diese Spannung tritt insbesondere bei einem Solargenerator bei maximaler Einstrahlung und hoher Umgebungstemperatur auf. Damit ist der Strom auf der Primärseit des Hochfrequenz-Transformators sehr groß. Die Halbleiterschalter des Hochfrequenz-Wechselrichters müssen für diese hohen Ströme ausgelegt sein. Gleichzeitig müssen die Halbleiterschalter für die maximale Spannung der Energiequelle ausgelegt werden. Bedingt durch die Schaltverluste in den Halbleiterschaltem des Hochfrequenz-Wechselrichters steigen die Verluste mit zunehmender Spannung an der Energiequelle an.

Die Lösung gemäß der Druckschrift DE 199 37 410 A1 zeichnet sich nachteilig durch hohe Ströme auf der Primärseite des Hochfrequenz-Transformators aus, wobei die Halbleiterverluste mit zunehmender Spannung an der Energiequelle zunehmen. Berücksichtigt werden muss, dass je höher die maximal zulässige Sperrspannung der Halbleiter ist, die Durchlass- und Schaltverluste umso höher sind.

Nicht zweckmäßig bei dieser Lösung ist, dass erhebliche Halbleiterverluste aufgrund des hart schaltenden Betriebs vorhanden sind, weil in diesem Betriebspunkt große Schaltverluste in den Leistungshalbleitern entstehen. Dies hat nämlich einen geringen Wirkungsgrad der Anpasseinrichtung zur Folge.

Aus der US 5,717,582 A ist ein Wechselrichter zur Umwandlung einer Gleichspannung in eine Wechselspannung bekannt, der keine Anpasstufe aufweist und der einen Resonanzbetrieb, einen hart schaltenden Betrieb und einen weich schaltenden Betrieb ausführt. Diese Schaltung benötigt jedoch zusätzliche Hilfsschalter und zusätzliche Steuerungsmittel, wobei außerdem rechteckige oder trapezförmige Ströme vorhanden sind.

Der Erfindung liegt die Aufgabe zugrunde, eine Anpasseinrichtung nach dem Oberbegriff des Anspruches 1 mit hohem Wirkungsgrad bereitzustellen, die eine galvanische Trennung aufweist.

Weiterhin soll die Anzahl der stromdurchflossenen Halbleiterschalter möglichst klein sein und es soll ein resonant schaltender Hochfrequenz-Wechselrichter verwendet werden, ohne dass eine zusätzliche Anpassstufe erforderlich ist.

Diese Aufgabe wird durch die Merkmale des Anspruches 1 gelöst.

Die erfindungsgemäße Lösung bietet eine galvanische Trennung zwischen der Energiequelle und dem Versorgungsnetz an, und zwar bei einem sehr guten Wirkungsgrad und geringen Kosten. Sie verknüpft die Vorteile eines Resonanzwechselrichters mit den Vorteilen eines hart schaltenden Wechselrichters, und zwar geringe Schaltverluste ohne das Erfordernis einer Anpassstufe, wie ein Hochsetz- oder Tiefsetzsteller.

Für die erfindungsgemäße Steuerung ist ein Steuerungsmittel, insbesondere ein Mikroprozessor vorgesehen.
Der Erfindung liegt die Erkenntnis zugrunde, dass zwar die Verluste im Resonanzwechselrichter im hart schaltenden Betrieb deutlich größer als im voll resonanten Betrieb sind, dieser Nachteil kann aber in Kauf genommen werden, da der Betriebspunkt mit hart schaltendem Resonanzumrichter zeitlich sehr begrenzt ist und nur in der Aufstartphase vorkommt, in der die Energiequelle nicht belastet ist. Daher ergibt sich insgesamt ein sehr guter Wirkungsgrad ohne eine zusätzliche Anpassstufe.

Durch die galvanische Trennung ist die Einhaltung von Normen und Vorschriften ohne Weiteres möglich.

Der eingesetzte Resonanzumrichter weist also einen sehr günstigen Wirkungsgrad auf, wobei also auf eine zusätzliche Anpassstufe durch die Erfindung gänzlich verzichtet werden kann, indem der eingesetzte Resonanzumrichter im Betriebspunkt einer maximalen Leistung voll resonant, d.h. im Resonanzpunkt, betrieben wird und bei Spannungen oberhalb einer diesem Betriebspunkt zugeordneten Spannung der Energiequelle ein hart schaltender Betrieb vorhanden ist. Dadurch sinken insgesamt die Schaltverluste und der Wirkungsgrad der Einrichtung wird verbessert.

Besonders günstig wirkt sich die Erfindung auf Generatoren mit einer hohen Innenimpedanz aus. Hier kann der Wirkungsgrad ohne Anpassstufe erheblich verbessert werden. Besonders günstig ist eine Ausführung als Solarwechselrichter.

Erfindungsgemäß liegt ein System mit einer Einrichtung vor, bei der die Energiequelle ein Solargenerator ist. Dieser weist eine relativ hohe Innenimpedanz auf aber auch eine relativ hohe Leerlaufspannung aufgrund der typischen Solarzellenkennlinie.

Da Solargeneratoren eine relativ hohe Leerlaufspannung erreichen können und diese stets im MPP-Punkt zu betreiben sind, ist es also sehr vorteilhaft, wenn die Energiequelle ein Photovoltalk-Solargenerator mit mindestens einem MPP-Punkt einer Solargeneratorkennlirlie ist, wobei der Resonanzwechselrichter im MPP-Punkt voll resonant betrieben wird und bei Spannungen oberhalb des MPP-Betriebspunktes hart schaltend betrieben wird. Die Sperrspannung der Halbleiterschalter kann deutlich reduziert werden. Hierbei ist der MPP-Punkt auch veränderbar, beispielsweise aufgrund von Temperaturschwankungen im Solargenerator im Laufe eines Tages.

Besonders günstig ist es, wenn im hart schaltenden Betrieb oberhalb des Betriebspunktes ein Transformatorstrom des Transformators aus Sinusabschnitten besteht. Dadurch entstehen zwarAusschaltverluste, aber keine Einschaltverluste im Wechselrichter.

In einer vorteilhaften Weiterbildung der Erfindung ist vorgesehen, dass die Halbleiterschalter des Resonanzwechselichters im Betriebspunkt (MPP) mit einer Aussteuerung betrieben werden, die größer ist als eine halbe Periodendauer der Resonanzfrequenz eines Schwingkreises. Der Schwingkreis besteht aus dem oder den Resonanzkondensator(en) und einer Transformatorstreuinduktivität. Hierbei erfolgt ein Betrieb bei Pulsweiten zwischen 30 und 50 % der Periodendauer der Taktfrequenz, so dass eine Spannung an einem Zwischenkreiskondensator einen für die Einspeisung in das Netz erforderlichen Minimalwert nicht unterschreitet. Dies gilt auch dann, wenn der Betriebspunkt, insbesondere die MPP-Spannung der Energiequelle, ein systembedingtes Minimum annimmt. Vorzugsweise wird die Einrichtung bei Spannungen der Energiequelle oberhalb der MPP-Spannung mit Pulsweiten zwischen 0 und 50 % betrieben, so dass die Spannung am Zwischenkreiskondensator einen durch die Spannungsfestigkeit der Halbleiterschalter des Netzwechselrichters gegebenen Maximalwert nicht überschreitet, auch wenn die Spannung der Energiequelle oberhalb der MPP-Spannung liegt. Durch diese Maßnahme ergibt sich im Normalbetrieb (MPP-Betrieb) ein Strom aus sinusähnlichen Halbwellen bei geringen Verlusten. Hierbei können Halbleiterschalter mit relativ geringen Sperrfestigkeiten eingesetzt werden.

Wenn im Resonanzwechselrichter bzw. Resonanzumrichter, der im Prinzip ein DC/AC-Wandler ist, und im Netzwechselrichter, der ebenfalls ein DC/AC-Wandier ist, Halbleiterschalter gleicher Spannungsfestigkeit verwendet werden, reduzieren sich die Herstellungskosten durch Verwendung gleichartiger Bauteile.

Vorteile von Hochfrequenz-Wechselrichtem können genutzt werden, wenn dem Transformator ein Hochfrequenz-Wechselrichter vorgeschaltet ist, wobei der Hochfrequenz-Wechselrichter Teil des Resonanzwechselrichters ist bzw. diesen bildet. Der Hochfrequenz-Wechselrichter umfasst die Halbleiterschalter zum Wandeln der Gleichspannung der Energiequelle in eine hochfrequente Spannung. Insbesondere sind die Schalter als MOS-Transistoren, IGBTs, GTOs ausgeführt.

Um die Schaltverluste in den Halbleiterschaltern des Resonanzumrichters gegenüber einem hart schaltenden Betrieb zu mindern, ist es günstig, dass der Resonanzwechselrichter, der Transformator und der Gleichrichter einen Resonanzumrichter bzw. eine Einheit (DC/DC-Einheit) bilden, wobei die Eigenfrequenz, die ein oder mehrere Resonanzkondensatoren einer Streuinduktivität des Transformators bilden, größer einer Schaltfrequenz des Resonanzwechselrichters ist. D.h., ein Hochfrequenz-Wechselrichter, der Transformator und der Gleichrichter bilden einen Resonanzumrichter.

Diese Schaltfrequenz ist vorgesehen, um die Schaltverluste in den Halbleiterschaltern (a - d; A,B) des Resonanzumrichters gegenüber einem hart schaltenden Betrieb zu mindern.

In einer vorteilhaften Ausgestaltung der Erfindung wird also anstelle eines Niederfrequenztransformators ein Hochfrequenz-Transformator eingesetzt.

Der Wechselrichter weist ein sehr geringes Gewicht bei kleinen Abmessungen auf, wenn der Hochfrequenz-Wechselrichter mit dem Hochfrequenz-Transformator und einem Hochfrequenz-Gleichrichter versehen ist.

Nach einer weiteren bevorzugten Ausführungsform der erfindungsgemäßen Vorrichtung soll bezweckt werden, dass sich in der Energiequelle und im Zwischenkreiskondensator geringere Rippelstrombelastungen ergeben sollen. Dies wird dadurch erreicht, dass mehrere Resonanzwechselrichter primärseitig an der Energiequelle parallel geschaltet und sekundärseitig an einem gemeinsamen Zwischenkreiskondensator angeschlossen sind, wobei die einzelnen Resonanzumrichter versetzt getaktet werden.

Weitere vorteilhafte Ausgestaltungen der Erfindung sind in den Unteransprüchen genannt.

Die Erfindung sowie weitere Vorteile derselben werden in der nachfolgenden Figurenbeschreibung näher erläutert.
Es zeigen:
- Fig. 1: ein Prinzipschaltbild einer bevorzugten Ausführungsform der Erfindung,
- Fig. 2: ein Strom/Spannungsdiagramm und Kennlinien einer Energiequelle,
- Fig. 3: primärseitige Strom- und Spannungsverläufe eines Transformators der erfindungsgemäßen Einrichtung,
- Fig. 4: weitere primärseitige Strom- und Spannungsverläufe eines Transformators der erfindungsgemäßen Einrichtung,
- Fig. 5: ein Schaltbild einer bevorzugten erfindungsgemäßen Lösung,
- Fig. 6: ein Schaltbild einer ersten Ausführungsvariante der bevorzugten erfindungsgemäßen Lösung,
- Fig. 7: ein Schaltbild einer zweiten Ausführungsvariante der bevorzugten erfindungsgemäßen Lösung, und
- Fig. 8: ein Schaltbild einer dritten Ausführungsvariante der bevorzugten erfindungsgemäßen Lösung,

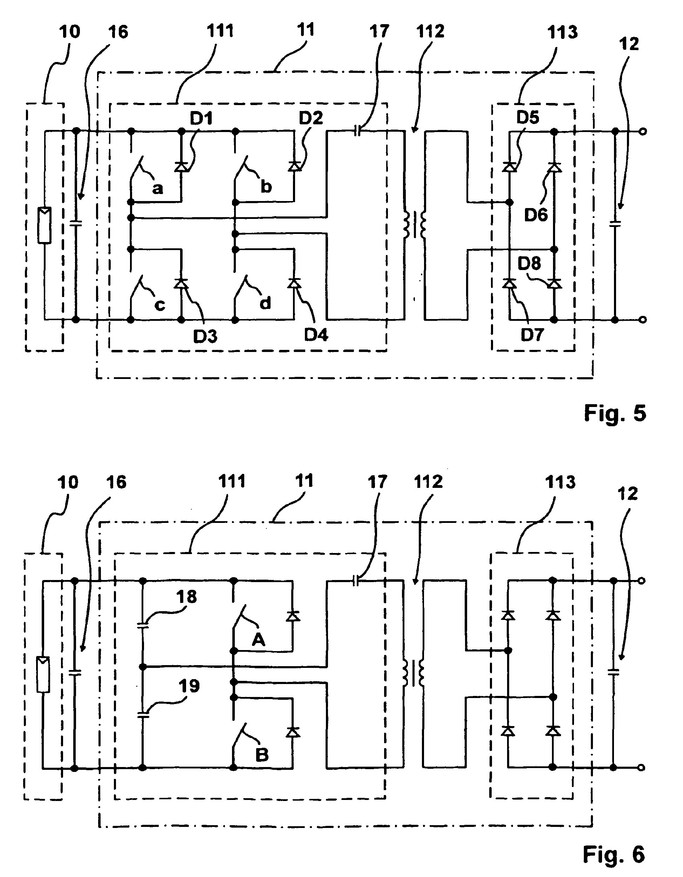

Die grundsätzliche Funktion der erfindungsgemäßen Einrichtung 1 wird zunächst anhand von Fg. 1 erläutert, wobei auch auf die Figuren 5 bis 7 Bezug genommen wird.

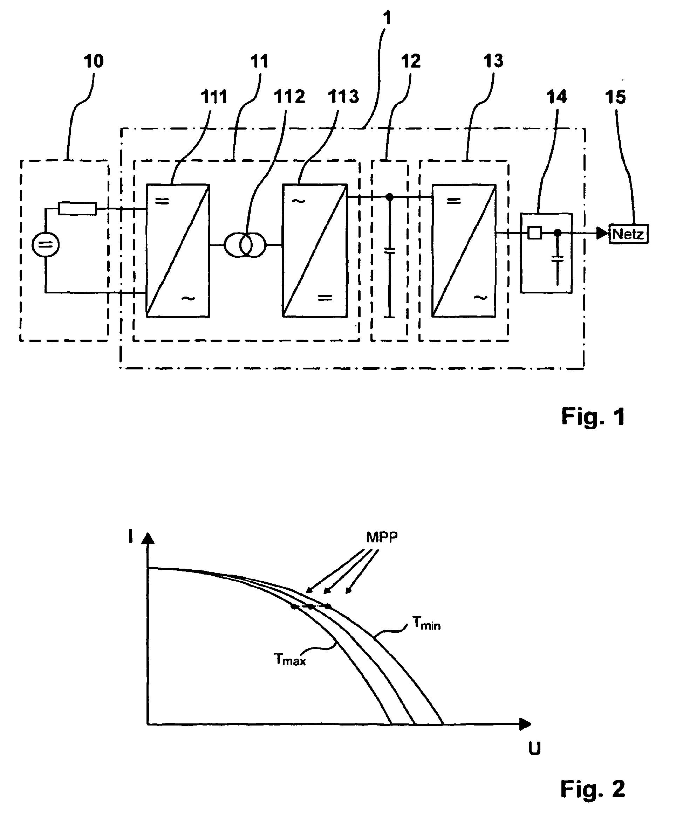

Die Einrichtung 1 umfasst einen Resonanzumrichter bzw. Resonanzwechselrichter 11 (DC/DC-Wechsethchter) mit einem Hochfrequenz-Wechselrichter 111 und einem Hochfrequenz-Gleichrichter 113, wobei diese durch einen zwischengeschalteten Hochfrequenztransformator 112 verbunden sind, um eine galvanische Trennung zu schaffen. Der Umrichter bzw. Wechselrichter 11 ist praktisch (ohne Netzwechselrichter) ein DC/DC-Wandler und dient zur Spannungsanpassung und zur galvanischen Trennung. Der Transformator 112 ist in dem Resonanzwechselrichter 11 angeordnet. Ein Gleichspannungeausgang des Hochfrequenz-Gleichrichters 113 führt zu einem Gleichspannungszwischenkreis (Zwischenkreiskondensator 12), wie in Fig. 1 veranschaulicht ist. Die Einrichtung 1 weist als letzte Stufe einen Netzwechselrichter 13 nach dem Gleichspannungszwischenkreis (Zwischenkreiskondensator 12) auf.

An einem Eingang der Einrichtung 1 ist eine Energiequelle, vorzugsweise eine Gleichspannungsquelle, insbesondere ein Photovoltalk- bzw. Solargenerator 10 angeschlossen, der elektrische Energie an ein Wechselspannungsnetz bzw. ein Energieversorgungsnetz 15 liefern soll. Der Resonanzwechselrichter 11 ist der Energiequelle direkt nachgeschaltet. Der Ausgang des Netzwechselrichters 13 wird hierbei an das Netz 15 angeschlossen, wobei vorzugsweise an dem Netzwechselrichter 13 ein geeigneter Netzfilter 14 nachgeschaltet ist.

Die Einrichtung 1 arbeitet als Anpasseinrichtung 1 und passt die durch die Energiequelle bzw. dem Solargenerator 10 zur Verfügung gestellte Spannung an die Spannungs- und Frequenzverhältnisse im Energieversorgungsnetz 15 an, in das eingespeist werden soll. Der Hochfrequenz-Wechselrichter 111 wandelt die Gleichspannung des Solargenerators in Wechselspannung um, die dann über den Hochfrequenz-Transformator 112 auf das gewünschte Spannungsniveau transformiert wird. Auf der Sekundärseite des Hochfrequenz Transformators 112 wird die Spannung durch den Gleichrichter 113 gleichgerichtet.

Das Übersetzungsverhältnis des Hochfrequenz-Transformators 112 stellt sicher, dass in einem MPP-Bereich, d.h. in einem Kennlinienpunkt maximaler Generatorleistung, der Solargenerator 10 am Gleichspannungszwischenkreis (Zwischenkreiskondensator 12) eine solch hohe Spannung aufweist, dass in das Energieversorgungsnetz 15 eingespeist werden kann.

Fig.2 zeigt beispielhaft ein typisches Ausgangskennlinienfeld des Solargenerators 10. Im Leerlauf, also bei unbelastetem Solargenerator 10, weist die Spannung des Generators 10 den höchsten Wert auf. Im sogenannten MPP-Punkt ist die Spannung niedriger als im Leerlauf. In diesem Arbeitspunkt wird jedoch der höchste Energieertrag erzielt, so dass der Solargenerator 10 dauerhaft in diesem Punkt betrieben werden sollte. Mit zunehmender Temperatur, d.h. im Laufe des Tages oder bei längerem Betrieb des Solargenerators, verschiebt sich die Kennlinie aufgrund von Erwärmungsvorgängen in Solarzellen des Generators 10. Bei gleicher Sonneneinstrahlung liefern Solarzellen nämlich bei geringeren Temperaturen eine höhere Leeriaufspannung und auch eine höhere Leistung. Die Leerlaufspannung nimmt also mit zunehmender Erwärmung ab, was durch Tmin und Tmax angedeutet ist (T = Temperatur der Solarzellen). Auch die MPP-Spannung verschiebt sich entsprechend Fig.2, so dass sich der MPP-Bereich zwischen Tmin und Tmax einstellt. Der Resonanzwechselrichter 11 umfasst, wie Fig. 5 zeigt, einen Resonanzkondensator 17.

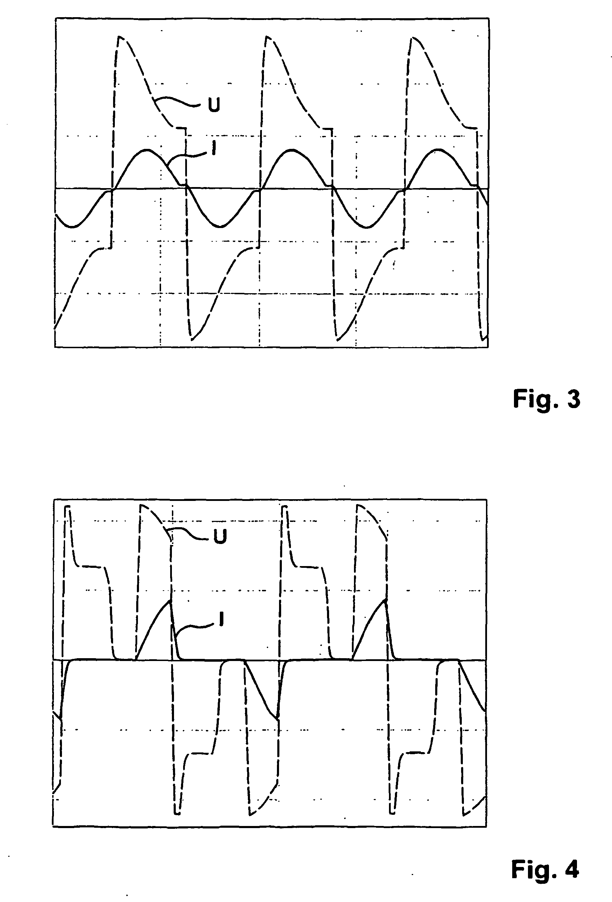

Der Resonanzwechselrichter 11 wird im MPP-Bereich des Solargenerators 10 erfindungsgemäß immer voll resonant betrieben. Fig. 3 zeigt den sich einstellenden typischen Verlauf des Transformatorprimärstroms I des Hochfrequenztransformators 112 sowie seiner Transformatorprimärspannung U. Während der Resonanzkondensator 17 umgeladen wird, fließt ein nahezu sinusförmiger Strom durch eine Primärwicklung des Transformators 112. Die Resonanzfrequenz wird vorzugsweise dabei durch die Streuinduktivität des Transformators 112 und den Resonanzkondensator 17 bestimmt und so eingestellt, dass sie höher als die Taktfrequenz der Halbleiterschalter a - d bzw. A, B des Resonanzwechselrichters 11 ist. Der Resonannwechselrichter 11 umfasst insbesondere zwei oder vier Halbleiterschalter a, b, c, d, A, B die insbesondere Transistoren sind. Die Halbleiterschalter a, b, c, d, A, B des Resonanzwechselrichters 11 schalten dann zu dem Zeitpunkt, an dem der Strom in der Primärwicklung nahezu Null ist. Damit wird ein Minimum an Schaltverlusten sichergestellt ist der Umladeprozess des Kondensators abgeschlossen, fließt noch ein geringer Reststrom, nämlich der Magnetisierungsstrom. Die Transformatorspannung wird bestimmt durch die Überlagerung der Spannung am Zwischenkreis (Zwischenkreiskondensator 12), entsprechend dem Übersetzungsverhältnis, und der Spannung über dem Resonanzkondensator 17. Der Resonanzkondensator 17 wird während des sinusförmigen Stromflusses umgeladen. Der Umladeprozess bildet sich deutlich in der Transformatorspannung ab (siehe Fig. 3). Die Transistoren bzw. Halbleiterschalter a, b, c, d bzw. A, B des Resonanzwechselrichters 11 werden im MPP-Punkt mit Pulsweiten von ca. 30 und 50% der Periodendauer betrieben, so dass die Spannung am Zwischenkreiskondensator 12 einen für die Einspeisung in das Netz 15 erforderlichen Minimalwert nicht unterschreitet, auch wenn die MPP-Spannung des Solargenerators 10 das systembedingte Minimum annimmt.

Die Spannung im Gleichspannungszwischenkreis (Zwischenkreiskondensator 12) muss insbesondere immer größer als das 1,5-fache des Scheitelwertes der Leiterspannung im Energieversorgungsnetz sein, wenn es sich beim Wechselrichter 11 um einen dreiphasigen Wechselrichter handelt oder sie muss größer als das 1,5-fache des Scheitelwertes der Mittelpunktspannung im Energieversorgungsnetz sein, wenn es sich um einen einphasigen Wechselrichter handelt. Falls die Spannung im Gleichspannungszwischenkreis (Zwischenkreiskondensator 12) größer als diese Minimalspannung ist, erfolgt die Feinanpassung durch den einphasigen oder dreiphasigen Wechselrichter.

Für den Fall, dass der Solargenerator 10 nicht belastet wird, kann sie bedingt durch ihre hohe Innenimpedanz einen sehr viel höheren Wert aufweisen als im MPP-Bereich. Würde in diesem Betriebszustand, der z.B. während des Aufstartens der Einspeiseeinrichtung 1 auftreten kann, der Resonanzwechselrichter 11 voll resonant betrieben, so kann es im Gleichspannungszwischenkreis (Zwischenkreiskondensator 12) zu so hohen Spannungen kommen, für die die Halbleiterschalter z.B. D5 bis D8 und die Halbleiterschalter der Netzstücke 13 der Anpasseinrichtung 1 nicht ausgelegt sind.

Liegt die Spannung des Solargenerators 10 oberhalb der MPP-Spannung wird der Resonanzwechselrichter 11 nun im sogenannten hart schaltenden Betrieb betrieben. In diesem Betriebspunkt schalten die Halbleiterschalter z.B. a - d des Resonanzwechselrichters 11 bzw. des Hochfrequenz-Wechselrichters 111 den Transformatorstrom hart ab. Dadurch entstehen die in Fig.4 dargestellten Verläufe für den Transformatorprimärstrom 1 und die Transformatorprimärspannung U. Bei Spannungen des Solargenerators 10 oberhalb der MPP-Spannung werden die Halbleiterschalter z.B. a - d des Wechselrichters 11 bzw. 111 vorzugsweise mit Pulsweiten zwischen Null und 50 % betrieben, so dass die Spannung am Zwischenkreiskondensator 12 einen durch die Spannungsfestigkeit von Halbleitern, insbesondere Halbleiterschaltern des Netzwechselrichters 13 gegebenen Maximalwert nicht überschreitet, auch wenn die Spannung des Solargenerators 10 oberhalb der MPP-Spannung liegt. So kann der Resonanzwechselrichter 11 die Spannung im Gleichspannungszwischenkreis (Zwischenkreiskondensator 12) regeln. Die Verluste im Resonanzwechselrichter 11 sind dabei deutlich größer als im voll resonanten Betrieb. Dieser Nachteil kann aber In Kauf genommen werden, da der Betriebspunkt mit hart schaltendem Resonanzwechselrichter 11 zeitlich sehr begrenzt ist und nur in der Startphase vorkommt, in der die Energiequelle nicht belastet ist. Bei einer Aussteuerung, die größer ist als die halbe Periodendauer der Resonanzfrequenz des Schwingkreises aus Resonanzkondensator und Transformatorstreuinduktivität und im Allgemeinen zwischen 30% und 50% Aussteuerung liegt, würde sich ein sinusförmiger Strom einstellen. Für kürzere Einschaltzeiten wird der sinusförmige Strom angeschnitten, und es stellt sich der beispielhaft in Fig.4 dargestellte Strom durch die Transformatorprimärwicklung ein. Zu Beginn des Stromflusses ist der Kondensator 17 maximal geladen.

Während des Stromanstiegs wird der Kondensator 17 umgeladen. Werden die Halbleiterschalter z.B. a - d des Wechselrichters 11 bzw. 111 abgeschaltet, fließt der Strom durch die den Halbleiterschaltern z.B. a - d in der zugeordneten Kommutierungsgruppe gegenüberliegenden Dioden z.B. D1 - D4, bis er abgebaut ist. Die Transformatorspannung wird weder bestimmt durch die Überlagerung der Spannung am Zwischenkreis (Zwischenkreiskondensator 12), entsprechend dem Übersetzungsverhältnis, und der Spannung am Resonanzkondensator 17. Ist jeweils ein Paar der sich gegenüberliegenden Halbleiterschalter z.B. a - d des Resonanzwechselrichters 11 geöffnet, wird der Kondensator 17 umgeladen. Die Spannungsänderung am Kondensator 17 bildet sich entsprechend in der Transformatorspannung ab. In der Kommutierungphase nach dem Ausschalten der aktiven Schalter z. B. a - d wird entsprechend dem Stromfluss der fallenden Flanke eine Spannungsspitze induziert, solange der Strom durch eine der Dioden D1 bis D4 fließt. Die Spannung fällt dann auf das Niveau der Zwischenkreisspannung am Kondensator 12, multipliziert mit dem Übersetzungsverhältnis des Transformators, ab. In dieser Phase fließt durch die sekundärseitigen Dioden, z.B. Dioden D5 - D8, ein Reststrom, der Magnetisierungsstrom des Transformators 112. Ist dieser Magnetisierungsstrom abgebaut, ist die Trafospannung Null. Die Phase, in der die Transformatorspannung Null ist, kann auch entfalten.

Eine bevorzugte Ausführungsform der Erfindung wird anhand der Fig.5 näher erläutert.

Dem Solargenerator 10 mit einem Pufferkondensator 16 oder einer anderen DC-Quelle ist ein Resonanzwechselrichter 11 in Form einer Vollbrückenschaltung mit den vier Halbleiterschaltern a - d nachgeschaltet.

Die Vollbrückenschaltung ist mit dem Transformator 112 über den Kondensator 17 verbunden. Der Gleichrichter 113 ist dem Transformator 112 nachgeordnet. Die nicht gezeigte Streuinduktivität dieses Transformators bildet mit dem Kondensator 17 eine Serienresonanz. Ist die sich einstellende Resonanzfrequenz größer als die Schaltfrequenz der Schalter der Vollbrückenschaltung, können die Schalter a - d verlustlos ein- und ausgeschaltet werden.

Der Hochfrequenz-Wechselrichter 111 und der Hochfrequenztransformator 112 bilden gemeinsam mit dem sekundärseitigen Gleichrichter 113 eine Resonanzumrichterschaltung bzw. den Resonanzwechselrichter 11.

Dem Resonanzwechselrichter 11 ist der Zwischenkreiskondensator 12 und der Netzwechselrichter 13 (hier nicht dargestellt) nachgeschaltet. Der Netzwechselrichter 13 wird, wie bereits in Fig.1 gezeigt, über den hier nicht dargestellten Netzfilter 14 mit dem hier nicht dargestellten Energieversorgungsnetz 15 verbunden.

Bedingt durch die Resonanzumrichterschaltung sind die Spannungen am Kondensator 16 und dem Zwischenkreiskondensator 12 hart gekoppelt. Das heißt, unter Last sind beide Spannungen gemäß des Transformatorübersetzungsverhältnisses proportional zueinander, solange der Umrichter im voll resonanten Betrieb betrieben wird.

Am Anfang des Anlaufvorgangs ist die Spannung an dem Solargenerator 10 so groß, dass ein voll resonanter Betrieb nicht möglich ist. Der Resonanzwechselrichter 11 wird dann im hart schaltenden Betrieb betrieben.

Fig.4 zeigt den prinzipiellen Verlauf des Primärstroms im hart schaltenden Betrieb. Die sich diagonal gegenüber liegenden Halbleiterschalter a und d bzw. b und c des Wechselrichters 11 bzw. 111 werden jeweils gleichzeitig geöffnet. Dabei können sie zwischen Null und 50% der Periodendauer aufgesteuert werden. Bei knapp 50% der Aufsteuerung würde sich ein nahezu sinusförmiger Strom einstellen. Für kürzere Einschaltzeiten wird der sinusförmige Strom angeschnitten, und es stellt sich ein Strom wie beispielhaft in Fig.4 gezeigt ein. Fig.4 zeigt ebenfalls den Spannungsverlauf über der Primärwicklung des Transformators 112.

Sobald die Zwischenkreisspannung am Zwischenkreiskondensator 12 aufgebaut ist, beginnt der Netzwechselrichter 13 mit der Einspeisung von Energie in das Energieversorgungsnetz 15. Dadurch wird die Energiequelle, d.h. der Solargenerator 10, belastet. Die Spannung an dem Solargenerator 10 sinkt dadurch ab. Wenn die Spannung durch die Belastung so weit abgesunken ist, dass eine zu große Spannung im Zwischenkreiskondensator 12 nicht mehr auftreten kann, geht der Resonanzwechselrichter 11 bzw. 111 in den voll resonanten Betrieb über. Der Anlaufvorgang ist dann beendet.

Fig.3 zeigt den prinzipiellen Verlauf des Primärstroms des Transformators 112 im resonanten Betrieb. Innerhalb einer halben Periode stellt sich ein nahezu halbsinusförmiger Strom ein. Dabei ist die Resonanzfrequenz, d.h. die Stromfrequenz, so eingestellt, dass sie höher ist als die Taktfrequenz der Halbleiterschalter, z.B. a - d, des Wechselrichters 11 bzw. 111. Die Halbleiterschalter, z.B. a - d, des Wechselrichters 11 bzw. 111 können zwischen ca. 30% und 50% der Periodendauer aufgesteuert werden. Dabei ist eine Aufsteuerung zweckmäßig, die größer ist als die halbe Periodendauer der Resonanzfrequenz des Schwingkreises aus Resonanzkondensator 17 und Transformatorstreuinduktivität. Während des Stromflusses durch die Primärwicklung des Transformators 112 wird der Kondensator 17 umgeladen. In Fig.3 ist ebenfalls der Spannungsverlauf über der Primärwicklung des Transformators 112 dargestellt. Diese Spannung wird bestimmt durch die Spannungen am Gleichspannungszwischenkreis (Zwischenkreiskondensator 12) und am Resonanzkondensator 17.

Es ist in der Regel eine Spannungsübersetzung erforderlich, wenn der Resonanzwechselrichter 11 bzw. 111 und der Netzwechselrichter 13 mit Halbleiterschaltern, z.B. a - d, gleicher Spannungsfestigkeit ausgerüstet werden sollen. Die Halbleiterschalter, z.B. a - d, im Resonanzwechselrichter 11 bzw. 111 müssen für die Leerlaufspannung des Solargenerators 10 ausgelegt sein. Die Halbleiterschalter, z.B. a - d, im Netzwechselrichter 13 müssen für die Spannung am Zwischenkreiskondensator 12 ausgelegt sein, die sich bei voll resonantern Betrieb im MPP-Punkt ergibt. Eine Übersetzung ist deshalb in der Regel erforderlich, weil sich bei einer Übersetzung von 1:1 oder weniger im MPP-Punkt eine so kleine Spannung am Zwischenkreiskondensator 12 einstellen würde, dass eine Netzeinspeisung nicht möglich wäre.

In einem Dimensionierungsbeispiel wird von einer Spannungsfestigkeit der Halbleiter von 1200V und von einem Spannungsbereich der DC-Quelle bzw. des Solargenerators 10 von 450V bis 900V ausgegangen: Bei einer Übersetzung von z.B. 1 : 1,33 wird bei der minimalen Eingangsspannung von 450V noch eine Zwischenkreisspannung am Kondensator 12 von 600V erzielt. Diese Spannung ist minimal erforderlich, um in ein dreiphasiges 400V-Niederspannungsnetz einspeisen zu können. Bei einer DC-Quel/spannung zwischen 450V und 675V kann der Resonanzwechselrichter 11 voll resonant betrieben werden, ohne dass sich eine Spannung von über 900V am Kondensator 12 ergibt. Der DC-Quellspannungsbereich zwischen 450V und 675V ist damit der MPP-Bereich der DC-Spannungsquelle. Für Spannungen zwischen 675V und 900V der DC-Quelle wird der Resonanzwechselrichter 11 hart schaltend betrieben, so dass die Zwischenkreisspannung am Kondensator 12 eine Spannung von 900V nicht übersteigt. Spannungen von 675V und 900V treten nur bei unbelasteter DC-Quelle, also im Leerlauf oder Anlauf, auf.

Der Netzwechselrichter 13 kann also mit Halbleiterschalten, z.B. a - d, ausgerüstet werden, die bei voll resonantem Betrieb zwar für den Betrieb im MPP nicht aber für den Betrieb bei Leerlauf der Eingangsspannungsquelle geeignet sind. Dadurch wiederum können Halbleiterschalter a - d und z.B. entsprechende Freilaufdioden mit niedrigerer Sperrspannung und damit geringen Verlusten verwendet werden. Außerdem sind solche Halbleiter kostengünstiger. Der Resonanzwechselrichter 11 kann auch mit Halbleiterschaltern, z.B. a - d, anderer Spannungsfestigkeit als für den Netzwechselrichter 13 ausgerüstet sein.

Als Schalter können alle bekannten abschaltbaren Halbleiterschalter eingesetzt werden, wie beispielsweise IGBTs, MOSFETs, GTOs.

Eine erste Ausführungsvariante der Ausführungsform gemäß Fig. 5 ist in Fig. 6 dargestellt. Der Wechselrichter 11 bzw. der Hochfrequenz-Wechselrichter 111 ist hier als Halbbrückenschaltung mit zwei Halbleiterschaltern A und B ausgeführt. Parallel zum Kondensator 16 ist eine Reihenschaltung von zwei weiteren Kondensatoren 18 und 19 mit einem Mittenabgriff vorhanden. Der Resonanzkreis wird durch die Streuinduktivität des Transformators 112 und die Kapazität der Kondensatoren 17, 18 und 19 gebildet. Bei entsprechender Auslegung kann der zusätzliche Kondensator 17 auch entfallen. Die Resonanzkapazität wird dann nur durch die Kondensatoren 18, 19 der Halbbrücke gebildet.

An der grundsätzlichen Funktion der Schaltung gemäß Fig. 1 oder 5 ändert sich nichts. Diese Variante benötigt jedoch nur zwei Halbleiterschalter. Sie erfordert auch keinen Transformator mit primärseitigem Mittenabgriff.

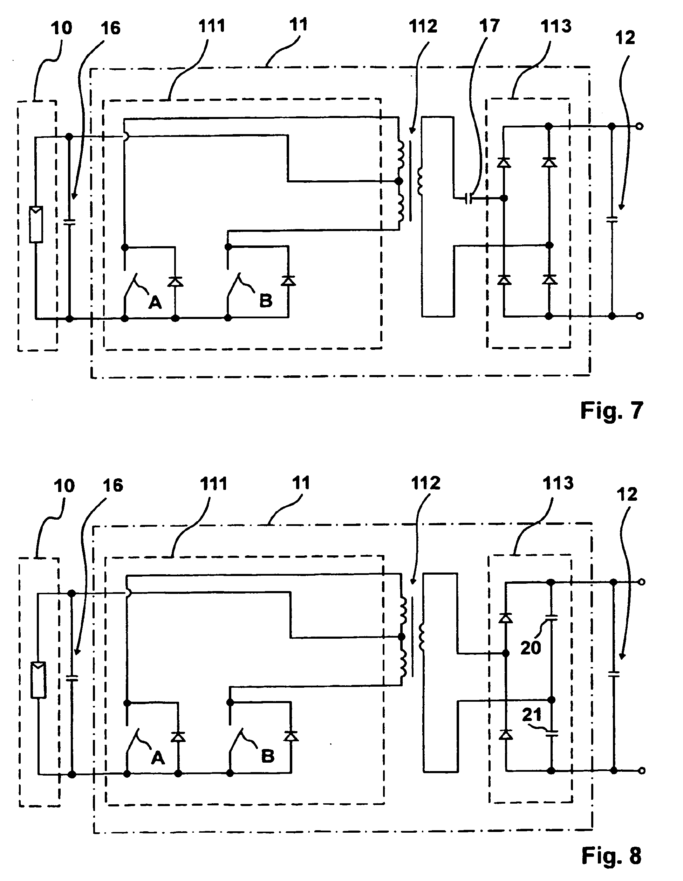

Eine weitere Ausführungsvariante der Erfindung ist in Fig.7 veranschaulicht. Der Resonanzumrichter 11 ist hier primärseitig als Mittelpunktschaltung mit zwei Halbleiterschaltern A und B ausgeführt. Der Resonanzkondensator 17 ist dann auf der Sekundärseite des Transformators 112 angeordnet.

In dieser Ausführungsvariante werden Halbleiterverluste auf der Primärseite des Transformators 112 auf ein Minimum reduziert. Dafür müssen Halbleiterschalter A und B mit einer höheren Sperrfähigkeit eingesetzt werden.

An der grundsätzlichen Funktion der Schaltung gemäß Fig. 1 oder 5 ändert sich ebenfalls nichts. Diese Variante benötigt ebenfalls nur zwei Halbleiterschalter und ist für geringe Quellenspannungen geeignet. Sie erfordert, im Gegensatz zu der vorhergehenden Ausführungsform, einen Transformator mit primärseitigen Mittenabgriff.

Ein viertes Beispiel der Erfindung ist in Fig.8 gezeigt. Der Resonanzumrichter 11 ist hier primärseitig als Mittelpunktschaltung mit Halbleiterschaltern A und B ausgeführt. Hierbei sind zwei in Reihe geschaltete Resonanzkondensatoren 20, 21 vorhanden. Die Resonanzkondensatoren 20, 21 sind als Bestandteil des Gleichrichters 113 als Halbbrückenschaltung auf der Sekundärseite angeordnet. Prinzipiell kann, wie bereits in Fg.7 gezeigt ist, auch ein zusätzlicher Resonanzkondensator 17 in Serie zur Sekundärwicklung des Hochfrequenztransformators 112 eingefügt werden.

In dieser Ausführungsvariante werden die Halbleirterverluste auf der Primärseite des Transformators auf ein Minimum reduziert. Dafür müssen Halbleiterschalter A und B mit einer höheren Sperrfähigkeit eingesetzt werden.

An der grundsätzlichen Funktion der Schaltung gemäß Fig. 1 oder 5 ändert sich ebenfalls nichts. Diese Variante benötigt nur zwei Halbleiterschalter und ist für geringe Quellenspannungen geeignet. Sie erfordert einen Transformator mit primärseitigem Mittenabgriff.

Ein hohe Innenimpedanz ist im Sinne der Erfindung gegeben, wenn die Leeriaufspannung gegenüber einem Betriebspunkt, an dem eine Last anliegt, sich um mehr als 20%, insbesondere mehr als 40% ändert.

Anstelle eines einzigen Resonanzwechselrichters können alternativ auch mehrere Wechselrichter, insbesondere mehrere Hochfrequenz-Wechselrichter 111 primärseitig am Transformator 112 vorhanden sein. Diese sind praktisch an der Energiequelle parallel geschaltet und sekundärseitig bezüglich des Transformators 112 an einem gemeinsamen Zwischenkreiskondensator 12 angeschlossen. Die einzelnen Hochfrequenzwechselrichter (111.1 bis 111.n) werden versetzt getaktet, so dass sich in der Energiequelle und im Zwischenkreiskondensator 12 geringere Rippelstrombelastungen ergeben.

Auch kann, was nicht gezeigt ist, eine Streuinduktivität des Transformators 112 durch eine oder mehrere zusätzliche Induktivitäten ergänzt werden, um die gewünschte Resonanzfrequenz zu erzielen.

### Bezugszeichenliste

- 1: Einspeiseeinrichtung
- 10: Solargenerator
- 11: Resonanzwechselrichter
- 12: Gleichspannungszwischenkreis
- 13: Netzwechselrichter
- 14: Netzfilter
- 15: Energieversorgungsnetz
- 16: Pufferkondensator
- 17: Resonanzkondensator
- 18 19: weitere Kondensatoren
- 20,21: Resonanzkondensatoren
- 111: Hochfrequenz-Wechselrichter
- 112: Hochfrequenztransformator
- 113: Hochfrequenz-Gleichrichter

## Patentansprüche

1. Einrichtung (1) zum Einspeisen elektrischer Energie aus einem Solargenerator in ein elektrisches Energieversorgungsnetz (15), wobei die Einrichtung (1) einen Transformator (112) zur galvanischen Trennung, einen Resonanzwechselrichter (11) mit Halbleiterschaltern (a - d; A,B), einen oder mehreren Resonanzkondensatoren (17; 18, 19; 20, 21) und einen Gleichrichter (113) umfasst,
**gekennzeichnet durch**
eine Ausführung ohne einen Hochsetz- und ohne einen Tefsetzsteller wobei die Einrichtung derart angepasst ist, dass der Resonanzwechselrichter (11) bei einer Betriebsspannung in einem MPP-Betriebspunkt, der im Normalbetrieb vorhanden ist, voll resonant betrieben wird, wobei im MPP-Betrieb der Primär-Transformatorstrom aus sinusähnlichen Halbwellen besteht, und bei Spannungen oberhalb des Betriebspunktes (MPP) hart schaltend betrieben wird, so dass der Primär-Transformatorstrom aus Sinusabschnitten besteht, wobei der hart schaltende Betrieb nur in einer Aufstartphase des Solargenerators vorkommt.

2. Einrichtung nach Anspruch 1, die dazu eingerichtet ist und
**dadurch gekennzeichnet ist,**
**dass** die Halbleiterschalter (a - d; A,B) des Resonanzwechselrichters (11) im Betriebspunkt (MPP) mit einer Aufsteuerung, die größer ist als eine halbe Periodendauer der Resonanzfrequenz eines Schwingkreises aus dem oder den Resonanzkondensator(en) und einer Transformatorstreuinduktivität, bei Pulsweiten zwischen 30% und 50% der Periodendauer der Taktfrequenz betrieben werden, so dass eine Spannung an einem Zwischenkreiskondensator (12) einen für die Einspeisung in das Netz (15) erforderlichen Minimalwert nicht unterschreitet, auch wenn die Spannung (MPP) der Energiequelle ein systembedingtes Minimum annimmt, und bei Spannungen der Energiequelle oberhalb der Spannung (MPP) mit Pulsweiten zwischen Null und 50 % betrieben wird, so dass die Spannung am Zwischenkreiskondensator (12) einen durch die Spannungsfestigkeit der Halbleiterschalter (a - d, A, B) des Netzwechselrichters (13) gegebenen Maximalwert nicht überschreitet, auch wenn die Spannung der Energiequelle oberhalb der Betriebsspannung (MPP) liegt.

3. Einrichtung nach einem der vorhergehenden Ansprüche,
**dadurch gekennzeichnet,**
**dass** im Resonanzwechselrichter (11) und im Netzwechselrlchter (13) Halbleiterschalter gleicher Spannungsfestigkeit verwendet werden.

4. Einrichtung nach einem der vorhergehenden Ansprüche,
**gekennzeichnet durch**
eine Ausführung derart, dass im hart schaltenden Betrieb oberhalb des Betriebspunktes (MPP) ein Transformatorstrom des Transformators (112) aus Sinusabschnitten besteht.

5. Einrichtung nach einem der vorhergehenden Ansprüche,
**dadurch gekennzeichnet,**
**dass** der Transformator (112) ein Hochfrequenztransformator (112) ist und mit einer Frequenz betrieben wird, die größer als die Frequenz des Energieversorgungsnetzes (15) ist.

6. Einrichtung nach einem der vorhergehenden Ansprüche,
**dadurch gekennzeichnet,**
**dass** dem Transformator (112) ein Hochfrequenz-Wechselrichter (111) vorgeschaltet ist, der Teil des Resonanzwechselrichters (11) ist und der die Halbleiterschalter (a - d; A,B) umfasst, insbesondere MOS - Transistoren, IGBTs, GTOs umfasst.

7. Einrichtung nach einem der vorhergehenden Ansprüche,
**dadurch gekennzeichnet,**
**dass** der Netzwechselrichter (13) ein einphasiger- oder ein dreiphasiger Wechselrichter ist.

8. Einrichtung nach einem der vorhergehenden Ansprüche,
**dadurch gekennzeichnet,**
**dass** der Resonanzwechselrichter (11) eine Vollbrücke umfasst.

9. Einrichtung nach einem der vorhergehenden Ansprüche 1 bis 8,
**dadurch gekennzeichnet,**
**dass** der Resonanzwechselrichter (11) eine Halbbrücke umfasst.

10. Einrichtung nach Anspruch 9,
**dadurch gekennzeichnet,**
**dass** der Resonanzwechselrichter (11) als Mittelpunktschaltung ausgestaltet ist.

11. Einrichtung nach einem der vorhergehenden Ansprüche,
**dadurch gekennzeichnet,**
**dass** der Gleichrichter (113) als Halbbrücke ausgestaltet ist.

12. Einrichtung nach einem der vorhergehenden Ansprüche,
**dadurch gekennzeichnet,**
**dass** mindestens ein Resonanzkondensator (18, 19) zur Primärwicklung des Transformators (112) in Reihe oder parallel zu einem Resonanzkreis geschaltet ist.

13. Einrichtung zum Einspeisen elektrischer Energie entsprechend einer der vorhergehenden Ansprüche,
**dadurch gekennzeichnet,**
**dass** ein Resonanzkondensator (20, 21) zur Sekundärwicklung des Transformators (112) in Reihe oder parallel geschaltet ist.

14. Einrichtung nach einem der vorhergehenden Ansprüche,
**dadurch gekennzeichnet,**
**dass** die Kondensatoren (18, 19) einer am Transformator (112) primärseitigen Halbbrücke als Resonanzkondensatoren genutzt werden.

15. Einrichtung nach einem der vorhergehenden Ansprüche 1 bis 13,
**dadurch gekennzeichnet,**
**dass** die Kondensatoren (20, 21) einer sekundärseitigen Halbbrücke als Resonanzkondensatoren genutzt werden.

16. Einrichtung nach einem der vorhergehenden Ansprüche,
**dadurch gekennzeichnet,**
**dass** ein Hochfrequenz-Wechselrichter (111), der Transformator (112) und der Gleichrichter (113) einen Resonanzumrichter bilden, der ein DC/DC-Wandler ist, wobei die Eigenfrequenz, dei ein oder mehrere Resonanzkondensatoren (17; 18,19; 20,21) mit einer Streuinduktivität des Transformators (112) bilden, größer einer Schaltfrequenz des Resonanzwechselrichters (11) ist, um die Schaltverluste in den Halbleiterschaltern (a - d; A,B) des Resonanzumrichters 11 gegenüber einem hart schaltenden Betrieb zu mindern.

17. Einrichtung zum Einspeisen elektrischer Energie entsprechend einer der vorhergehenden Ansprüche
**dadurch gekennzeichnet,**
**dass** eine Streuinduktivität des Transformators (112) durch eine oder mehrere zusätzliche Induktivitäten ergänzt wird, um eine gewünschte Resonanzfrequenz zu erzielen.

18. Einrichtung nach einem der vorhergehenden Ansprüche
**dadurch gekennzeichnet,**
**dass** mehrere Resonanzwechselrichter (11) primärseitig an der Energiequelle parallel geschaltet sind und sekundärseitig an einem gemeinsamen Zwischenkreiskondensator (12) angeschlossen sind, wobei die einzelnen Resonanzumrichter versetzt getaktet werden.

19. Einrichtung nach einem der vorhergehenden Ansprüche
**dadurch gekennzeichnet,**
**dass** der Resonanzwechsetrichter (11) mit einem Netzwechselrichter (13) verbunden ist.

20. System mit einer Einrichtung nach einem der vorhergehenden Ansprüche und der Energiequelle,
**dadurch gekennzeichnet,**
**dass** die Energiequelle ein Solargenerator (10), eine Brennstoffzelle, eine Batterie, ein Windkraftwerk mit permanentmagnetischem Generator, eine Verbrennungsmaschine mit permanentmagnetischem Generator oder ein Wasserkraftwerk mit permanentmagnetischem Generator (PM-Generator) ist.

21. Verwendung einer Einrichtung nach einem der vorhergehenden Ansprüche in einem öffentlichen Energieversorgungsnetz, das eine Vielzahl von Verbrauchern oder ein Inselnetz mit einem oder mehreren Verbrauchern versorgt.

22. Betriebsverfahren einer Einrichtung nach einem der vorhergehenden Ansprüche, bei dem die Energiequelle ein Photovoltaik-Solargenerator mit mindestens einem MPP-Punkt einer Solargeneratorkennlinie ist, wobei der Resonanzwechselrichter (11) im MPP-Punkt voll resonant betrieben wird und bei Spannungen oberhalb des MPP-Betriebspunktes hart schaltend betrieben wird.

23. Einrichtung nach einem der vorhergehenden Ansprüche,
**dadurch gekennzeichnet,**
**dass** den Dioden D5 bis D8 des Resonanzgleichrichters (113) abschaltbare Leistungshalbleiter parallel geschaltet sind, so dass die Schaltung bidirektional betrieben werden kann, wenn es sich bei der Energiequelle um einen Energiespeicher, z. B. Batterie, handelt.

## Claims

1. A device (1) for feeding electrical energy from a solar generator into an electric power supply network (15), said device (1) including a transformer (112) for galvanic isolation, a resonant inverter (11) with semi-conductor switches (a - d; A, B), one or several resonant capacitors (17; 18, 19; 20, 21) and one rectifier (113),
**characterized by**
an implementation without a boost chopper and without a buck chopper, said device being adapted so that the resonant inverter (11) is operated in a full resonant mode if an operating voltage is in a maximum power operation point (MPP) that exists in normal operation, whereby in the maximum power point (MPP) the current from the primary transformer (112) consists in sinusoidal half-waves, and operation being in a hard-switching mode if the voltages exceed the maximum operation point (MPP), so that the current from the primary transformer consists of sine-wave portions, whereby the hard-switching mode only occurs in a start-up phase of said solar generator.

2. The device as set forth in claim 1, devised to and
**characterized in**
**that,** in the operation point (MPP), the semi-conductor switches (a - d; A, B) of the resonant inverter (11) are operated with a duty cycle that is more than half a period of the resonance frequency of an oscillating circuit consisting of the resonant capacitor(s) and of a transformer leakage inductance, at pulse widths ranging between 30 and 50 % of the period of the pulse frequency, so that a voltage at an intermediate circuit capacitor (12) will not fall below a minimum value needed for feeding the network (15), even if the voltage (MPP) of the energy source adopts a minimum value imposed by the device, and that, if the voltages of the energy source are higher than the (MPP) voltage, operation occurs at pulse widths of between zero and 50 % so that the voltage at the intermediate circuit capacitor (12) will not exceed a maximum value given by the electric strength of the semi-conductors (a - d, A, B) of the regen-capable mains inverter (13), even if the voltage of the energy source is higher than the (MPP) voltage.

3. The device as set forth in any one of the afore mentioned claims
**characterized in**
**that** semi-conductor switches of the same electric strength are used in the resonant inverter (11) and in the regen-capable mains inverter (13).

4. The device as set forth in any one of the afore mentioned claims,
**characterized by**
an implementation such that, in the hard-switching mode of operation above the operation point (MPP), a transformer current of the transformer (112) consists of sine-wave portions.

5. The device as set forth in any one of the afore mentioned claims,
**characterized in**
**that** the transformer (112) is a high-frequency transformer (112) and is operated at a frequency that is higher than the frequency of the energy supply network (15).

6. The device as set forth in any one of the afore mentioned claims,
**characterized in**
**that** a high-frequency inverter (111), which is part of the resonant inverter (11) and comprises the semi-conductor switches (a - d; A, B), more specifically MOS transistors, IGBT's, GTO's, is mounted upstream of the transformer (112).

7. The device as set forth in any one of the afore mentioned claims,
**characterized in**
**that** the regen-capable mains inverter (13) is a one-phase or a three-phase inverter.

8. The device as set forth in any one of the afore mentioned claims,
**characterized in**
**that** the resonant inverter (11) comprises a full bridge.

9. The device as set forth in any one of the afore mentioned claims 1 through 8,
**characterized in**
**that** the resonant inverter (11) comprises a half-bridge.

10. The device as set forth in claim 9,
**characterized in**
**that** the resonant inverter (11) is devised as a centre tap connection.

11. The device as set forth in any one of the afore mentioned claims,
**characterized in**
**that** the rectifier (113) is devised as a half-bridge.

12. The device as set forth in any one of the afore mentioned claims,
**characterized in**
**that** at least one resonant capacitor (18, 19) is connected in series or in parallel with a resonant circuit with respect to the primary winding of the transformer (112).

13. A device for feeding electrical energy as set forth in any one of the afore mentioned claims,
**characterized in**
**that** a resonant capacitor (20, 21) is connected in series or in parallel with the secondary winding of the transformer (112).

14. The device as set forth in any one of the afore mentioned claims,
**characterized in**
**that** the capacitors (18, 19) of a half-bridge located on the primary side of the transformer (112) are utilized as resonant capacitors.

15. The device as set forth in any one of the afore mentioned claims 1 through 13,
**characterized in**
**that** the capacitors (20, 21) of a secondary side half-bridge are utilized as resonant capacitors.

16. The device as set forth in any one of the afore mentioned claims,
**characterized in**
**that** a high-frequency inverter (111), the transformer (112) and the rectifier (113) form a resonant converter that is a DC/DC converter, the natural frequency formed by one or more resonant capacitors (17; 18, 19; 20, 21) with a leakage inductance of the transformer (112) being higher than a switching frequency of the resonant inverter (11) in order to minimize the switching losses in the semi-conductor switches (a - d; A, B) of the resonant converter (11) as compared to a hard-switching mode of operation.

17. The device for feeding electrical energy as set forth in any one of the afore mentioned claims,
**characterized in**
**that** a leakage inductance of the transformer (112) is complemented by one or several additional inductances in order to achieve a desired resonance frequency.

18. The device as set forth in any one of the afore mentioned claims,
**characterized in**
**that**, on the primary side, several resonant inverters (11) are mounted in parallel at the energy source and, on the secondary side, are connected to a common intermediate circuit capacitor (12), the discrete resonant converters being clocked at different times.

19. The device as set forth in any one of the afore mentioned claims,
**characterized in**
**that** the resonant inverter (11) is connected to a regen-capable mains inverter (13).

20. A system with a device as set forth in any one of the afore mentioned claims and with the energy source,
**characterized in**
**that** the energy source is a solar generator (10), a fuel cell, a battery, a wind power plant with a permanent-magnet generator, a combustion engine with a permanent-magnet generator or a water power plant with a permanent-magnet generator (PM-generator).

21. Use of a device as set forth in any one of the afore mentioned claims in a public energy supply network supplying a plurality of consumers or an island network with one or several consumers.

22. Operating method of a device as set forth in any one of the afore mentioned claims, the energy source of which is a photovoltaic solar generator with at least one MPP of a solar generator characteristic line, the resonant inverter (11) being operated in the full resonant mode in the MPP and in the hard-switching mode when the voltage exceeds the MPP.

23. The device as set forth in any one of the afore mentioned claims,
**characterized in**
**that** high-performance semi-conductors capable of being switched off are mounted in parallel with the diodes D5 through D8 of the resonant rectifier (113) so that the circuit may be operated bi-directionally if the energy source is an energy accumulator, e.g., a battery.

## Revendications

1. Dispositif (1) destiné à alimenter un réseau d'alimentation en énergie électrique (15) à partir d'un générateur solaire, le dispositif (1) comprenant un transformateur (112) pour la séparation galvanique, un onduleur à résonance (11) avec des commutateurs semi-conducteurs (a - d ; A, B), un ou plusieurs condensateurs à résonance (17 ; 18, 19 ; 20, 21) et un redresseur (113),
**caractérisé par**
une forme d'exécution sans hacheur élévateur et sans hacheur abaisseur, le dispositif étant adapté de manière à ce que l'onduleur à résonance (11) fonctionne entièrement sur le mode résonant quand la tension de service est à un point de puissance maximum qui existe en mode normal de fonctionnement, le courant du transformateur primaire consistant en demi-ondes sinusoïdales lorsqu'il fonctionne au point de puissance maximum et le fonctionnement se faisant à commutation forcée lorsque les tensions sont supérieures au point de fonctionnement (MPP) de sorte que le courant du transformateur primaire consiste en segments sinusoïdaux, le fonctionnement à commutation forcée n'ayant lieu que dans la phase de démarrage du générateur solaire.

2. Dispositif selon la revendication 1, qui est conçu et
**caractérisé en ce**
**que** les commutateurs à semi-conducteurs (a - d; A, B) de l'onduleur à résonance (11) fonctionnent avec un cycle de service supérieur à une demie durée de période de la fréquence résonante d'un circuit oscillant constitué du ou des condensateurs à résonance et d'une inductance de fuite du transformateur, à des largeurs d'impulsion comprises entre 30 % et 50 % de la durée de la période de la fréquence d'horloge de sorte qu'une tension à un condensateur de circuit intermédiaire (12) ne tombe pas en dessous d'une valeur minimale nécessaire à l'alimentation du réseau (15) même si la tension (MPP) de la source d'énergie adopte un minimum dû au système et le fonctionnement se faisant avec des largeurs d'impulsions comprises entre zéro et 50 % lorsque les tensions de la source d'énergie sont supérieures à la tension (MPP) de sorte que la tension au condensateur du circuit intermédiaire (12) ne dépasse pas une valeur maximale donnée par la stabilité de la tension des commutateurs à semi-conducteurs (a - d ; A, B) de l'onduleur de réseau (13) même si la tension de la source d'énergie est supérieure à la tension de fonctionnement (MPP).

3. Dispositif selon l'une quelconque des revendications précédentes,
**caractérisé en ce**
**que** des commutateurs à semi-conducteurs ayant une tension de tenue identique sont utilisés dans l'onduleur à résonance (11) et dans l'onduleur de réseau (13).

4. Dispositif selon l'une quelconque des revendications précédentes,
**caractérisé par**
une réalisation telle que, en mode de fonctionnement à commutation forcée au-dessus du point de fonctionnement (MPP), le courant du transformateur (112) est constitué de segments sinusoïdaux.

5. Dispositif selon l'une quelconque des revendications précédentes,
**caractérisé en ce**
**que** le transformateur (112) est un transformateur à haute fréquence (112) et qu'il fonctionne à une fréquence qui est supérieure à la fréquence du réseau d'alimentation en énergie électrique (15).

6. Dispositif selon l'une quelconque des revendications précédentes,
**caractérisé en ce**
**qu'**un onduleur à résonance (111) à haute fréquence faisant partie de l'onduleur à résonance (11) et comprenant les commutateurs semi-conducteurs (a - d ; A, B), notamment des transistors MOS, des IGBTs, des GTOs, est monté en amont du transformateur (112).

7. Dispositif selon l'une quelconque des revendications précédentes,
**caractérisé en ce**
**que** l'onduleur de réseau (13) est un onduleur mono- ou triphasé.

8. Dispositif selon l'une quelconque des revendications précédentes,
**caractérisé en ce**
**que** l'onduleur à résonance (11) comprend un pont complet.

9. Dispositif selon l'une quelconque des revendications précédentes,
**caractérisé en ce**
**que** l'onduleur à résonance (11) comprend un demi-pont.

10. Dispositif selon la revendication 9,
**caractérisé en ce**
**que** l'onduleur à résonance (11) est conçu comme montage à point médian.

11. Dispositif selon l'une quelconque des revendications précédentes,
**caractérisé en ce**
**que** le redresseur (113) est conçu comme demi-pont.

12. Dispositif selon l'une quelconque des revendications précédentes,
**caractérisé en ce**
**qu'**au moins un condensateur à résonance (18, 19) est monté en série ou en parallèle à un circuit résonant par rapport à l'enroulement primaire du transformateur (112).

13. Dispositif d'alimentation en énergie électrique selon l'une quelconque des revendications précédentes,
**caractérisé en ce**
**qu'**un condensateur à résonance (20, 21) est monté en série ou en parallèle par rapport à l'enroulement secondaire du transformateur (112).

14. Dispositif selon l'une quelconque des revendications précédentes,
**caractérisé en ce**
**que** les condensateurs (18, 19) d'un demi-pont situés côté primaire sur le transformateur (112) sont utilisés comme condensateurs à résonance.

15. Dispositif selon l'une quelconque des revendications précédentes 1 à 13,
**caractérisé en ce**
**que** les condensateurs (20, 21) d'un demi-pont situés côté secondaire sont utilisés comme condensateurs à résonance.

16. Dispositif selon l'une quelconque des revendications précédentes,
**caractérisé en ce**
**qu'**un onduleur à résonance (111) à haute fréquence, le transformateur (112) et le redresseur (113) forment un convertisseur à résonance qui est un convertisseur DC/DC, la fréquence propre qu'un ou plusieurs condensateurs à résonance (17 ; 18, 19 ; 20, 21) forment avec une inductance de fuite du transformateur (112) étant supérieure à une fréquence de commutation de l'onduleur à résonance (11) afin de diminuer les pertes de commutation dans les commutateurs semi-conducteurs (a - d ; A, B) du convertisseur à résonance (11) par rapport à un fonctionnement à commutation forcée.

17. Dispositif d'alimentation en énergie électrique selon l'une quelconque des revendications précédentes,
**caractérisé en ce**
**qu'**une inductance de fuite du transformateur (112) est complétée par une ou plusieurs inductances supplémentaires afin d'obtenir une fréquence de résonance souhaitée.

18. Dispositif selon l'une quelconque des revendications précédentes,
**caractérisé en ce**
**que** plusieurs onduleurs à résonance (11) sont montés en parallèle sur la source d'énergie, côté primaire, et qu'ils sont connectés côté secondaire à un condensateur de circuit intermédiaire commun (12), les différents convertisseurs à résonance étant cadencés de façon décalée.

19. Dispositif selon l'une quelconque des revendications précédentes,
**caractérisé en ce**
**que** l'onduleur à résonance (11) est relié à un onduleur de réseau (13).

20. Système avec un dispositif selon l'une quelconque des revendications précédentes et avec la source d'énergie,
**caractérisé en ce**
**que** la source d'énergie est un générateur solaire (10), une cellule électrochimique, une batterie, une centrale éolienne avec un générateur à aimant permanent, un moteur à combustion interne avec un générateur à aimant permanent ou une centrale hydroélectrique avec un générateur à aimant permanent.

21. Utilisation d'un dispositif selon l'une quelconque des revendications précédentes dans un réseau d'alimentation en énergie électrique public qui alimente un grand nombre de consommateurs ou un réseau isolé avec un ou plusieurs consommateurs.

22. Procédé de fonctionnement d'un dispositif selon l'une quelconque des revendications précédentes dans lequel la source d'énergie est un générateur solaire photovoltaïque avec au moins un point MPP d'une ligne caractéristique d'un générateur solaire, l'onduleur à résonance (11) fonctionnant entièrement à résonance au point MPP et fonctionnant à commutation forcée lorsque les tensions sont supérieures au point de fonctionnement MPP.

23. Dispositif selon l'une quelconque des revendications précédentes,
**caractérisé en ce**
**que** des semi-conducteurs haute puissance aptes à être mis hors service sont montés en parallèle aux diodes D5 à D8 de l'onduleur à résonance (113) de sorte que le montage peut fonctionner dans deux directions si la source d'énergie est un accumulateur d'énergie, p. ex. une batterie.
